(19) Europäisches Patentamt
European Patent Office
Office européen des brevets

(11) **EP 1 677 376 B1**

(12) **FASCICULE DE BREVET EUROPEEN**

(45) Date de publication et mention
de la délivrance du brevet:
**20.06.2012 Bulletin 2012/25**

(51) Int Cl.:
*H01M 4/66* (2006.01)     *H01M 6/14* (2006.01)

(21) Numéro de dépôt: **05292720.9**

(22) Date de dépôt: **16.12.2005**

(54) **Générateur électrochimique à cathode liquide**

Elektrochemischer Generator mit flüssiger Kathode

Electrochemical accumulator with liquid cathode.

(84) Etats contractants désignés:
**DE FR GB**

(30) Priorité: **28.12.2004 FR 0413982**

(43) Date de publication de la demande:
**05.07.2006 Bulletin 2006/27**

(73) Titulaire: **SAFT**
**93170 Bagnolet (FR)**

(72) Inventeurs:
• **Chenebault, Philippe**
**86000 Poitiers (FR)**
• **Simon, Bernard**
**33320 Le Taillan Medoc (FR)**

(74) Mandataire: **Hirsch & Associés**
**58, avenue Marceau**
**75008 Paris (FR)**

(56) Documents cités:
JP-A- 9 195 079     JP-A- 59 009 186
US-A- 4 293 622     US-A- 5 800 941
US-A- 5 981 108

• **G. E. BLOMGREN: "Advances in primary lithium liquid cathode batteries" JOURNAL OF POWER SOURCES, vol. 26, 1 janvier 1989 (1989-01-01), pages 51-64, XP002587848**
• **A.J. HILLS AND AL: "The Li-SOCl2 cell-a review" JOURNAL OF POWER SOURCES, vol. 24, 1 janvier 1988 (1988-01-01), pages 253-271, XP002587849**
• **CARMIER D ET AL: "Porosity of the cathode during the discharge of SOCl2/Li batteries - Influence of the porous morphology of the carbons used" JOURNAL OF POWER SOURCES, ELSEVIER SA, CH LNKD- DOI: 10.1016/S0378-7753(01)00870-9, vol. 103, no. 2, 1 janvier 2002 (2002-01-01), pages 237-244, XP004312749 ISSN: 0378-7753**

**Description**

DOMAINE TECHNIQUE

L'invention a pour objet un générateur électrochimique à cathode liquide. Un tel générateur comprend un composé électrochimiquement actif qui est liquide.

ETAT DE LA TECHNIQUE

Les générateurs électrochimiques primaires dits à cathode liquide, du type lithium/ chlorure de thionyle (Li/ $SOCl_2$) sont connus, et comprennent de façon classique une anode de lithium et une cathode à base de carbone. Une cathode en carbone classique comprend des grains de noir de carbone qui sont comprimés ensemble, en présence d'un liant, classiquement du PTFE.

Une telle cathode a en général une structure très poreuse. La valeur de porosité est définie dans ce qui suit par le rapport du volume de vide sur le volume géométrique de l'électrode. Elle peut être reliée aux notions de densité vraie $d_{vraie}$, qui est la densité théorique du matériau massif et de densité apparente $d_{app}$ (ou « bulk density » en anglais) du matériau comprenant les pores accessibles ou non. La relation liant la porosité vraie à la densité vraie et à la densité apparente est la suivante :

$$\text{Porosité} = 1 - \frac{d_{app}}{d_{vraie}}$$

La valeur de porosité de la cathode d'un générateur primaire à cathode liquide est en général de 0,7 à 0,9. La cathode est imprégnée de chlorure de thionyle, le liquide qui constitue la matière active cathodique. Le chlorure de thionyle contient un sel dissous qui permet la conductivité ionique du milieu. Au cours de la décharge du générateur, le chlorure de thionyle se réduit à la cathode. Du soufre et du chlorure de lithium, insolubles, précipitent progressivement dans la masse cathodique poreuse au cours de la décharge.

Lorsque les applications nécessitent des impulsions en décharge importantes, la tension du générateur chute sous l'effet des polarisations. Pour maintenir une tension élevée aux bornes du générateur, on augmente la surface active des électrodes afin de diminuer la densité de courant. Quand on augmente la surface active des électrodes, on augmente également le courant de court-circuit en cas de mise en court-circuit du générateur. Dans ce cas, la température du générateur peut atteindre des températures élevées. Si la température atteint 180°C, le lithium fond et réagit de façon très violente avec le chlorure de thionyle.

Afin de prévenir les phénomènes d'emballement thermique, chaque générateur est muni d'un fusible externe en cas de court-circuit. Si ce dispositif est retiré, la température du générateur devient très élevée s'il se produit un court circuit.

Dans le cas d'un court-circuit interne, il n'y a pas de système de limitation du courant et les risques d'emballement thermique subsistent. Dans ces conditions, la température atteinte par la pile entraîne l'ouverture des évents de sécurité.

Le document US 5 800 941 décrit un générateur électrochimique comprenant :

- une anode métallique en lithium ;
- un collecteur de courant en carbone poreux au contact duquel une solution contenant $SOCl_2$ ou $SO_2Cl_2$ réagit pour fournir du courant.

Un collecteur de courant en carbone non poreux conduit le courant depuis le collecteur de courant en carbone poreux vers la borne positive via un conducteur métallique. Le collecteur de courant en carbone non poreux a une porosité inférieure à 50 % i.e. inférieure à 0,5.

On recherche donc des moyens de faire chuter rapidement le courant de court-circuit d'un générateur primaire (notamment de type Li/$SOCl_2$), qu'il soit dans la situation d'un court-circuit interne, ou dans celle d'un court-circuit externe du générateur avec défaillance du fusible externe.

**RESUME DE L'INVENTION**

L'invention a pour but de réduire les risques d'emballement thermique d'un générateur primaire (notamment de type Li/$SOCl_2$) en cas de court-circuit. A cet effet, l'invention fournit un générateur électrochimique à matériau positif liquide comprenant une anode métallique et une cathode, selon la revendication 1.

L'utilisation d'une cathode de faible porosité permet de limiter la durée du courant de court-circuit et donc d'éviter les phénomènes d'emballement thermique. Le principe de fonctionnement repose sur le blocage momentané de l'électrode par les produits de réaction insolubles, contrairement au cas d'une électrode poreuse qui continue à fonctionner parce que les produits de décharge peuvent s'accumuler dans la porosité.

Une telle électrode de faible porosité permet cependant d'obtenir une capacité importante en décharge pulsée et en décharge à très faible courant.

BREVE DESCRIPTION DES FIGURES

D'autres caractéristiques de l'invention apparaîtront à la lecture de la description qui suit du mode de réalisation de l'invention donnée à titre d'exemple et en référence aux figures.

- La figure 1 représente une vue en coupe schématique d'un générateur de type $Li/SOCl_2$ selon l'invention.

- La figure 2 représente la variation du courant de court-circuit en fonction du temps pour :

 (a) un générateur selon l'invention,
 (b) un générateur selon l'état de la technique, au cours d'une décharge à travers une résistance de 50 mΩ, à une température de 20°C.

- La figure 3 représente la variation de la température en fonction du temps pour :

 (a) un générateur selon l'invention
 (b) un générateur selon l'état de la technique, au cours d'une décharge à travers une résistance de 50 mΩ, à une température de 20°C.

EXPOSE DETAILLE D'UN MODE DE REALISATION DE L'INVENTION

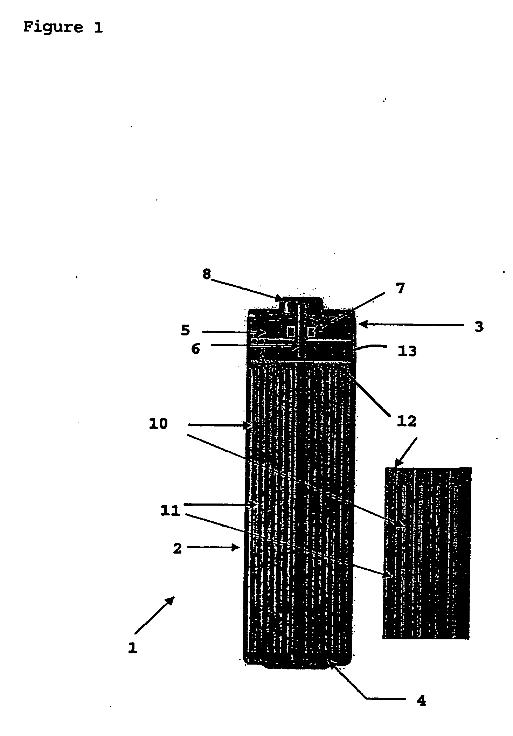

Le générateur de type $Li/SOCl_2$ selon l'invention peut être de format cylindrique, prismatique ou de format bouton. Dans l'exemple, il est de format cylindrique. La figure 1 représente une vue en coupe schématique de ce générateur.

Le générateur 1 comprend un godet conteneur 2 présentant une paroi cylindrique 3 obturée par un fond 4 à une extrémité. La paroi cylindrique 3 est débouchante à l'autre extrémité. Un enroulement spiralé d'au moins une électrode négative (anode) 10, d'au moins un séparateur 11 et d'au moins une électrode positive (cathode) 12 est introduit dans le godet 2.

Le montage peut également être réalisé avec des électrodes cylindriques concentriques auquel cas la cathode est un tube en vis à vis de l'anode de lithium.

Le godet conteneur est rempli d'un électrolyte 13. Un premier couvercle 5 obture l'extrémité débouchante de façon hermétique. L'étanchéité entre le godet 2 et ce couvercle 5 est assurée par une soudure. La partie centrale 6 de ce couvercle 5 est reliée à l'électrode positive. La partie centrale 6 est isolée électriquement du couvercle 5, relié au godet, par un anneau en verre 7. Un second couvercle 8 est soudé sur la partie centrale 6 et sert de borne positive. Le fond 4 est relié à l'électrode négative et sert de borne négative. Une disposition inverse des polarités est également possible.

Les différents constituants du générateur vont maintenant être décrits.

Le métal de l'anode est tout métal approprié dans l'art des générateurs à cathode liquide, et on peut citer les métaux alcalins et alcalinoterreux, et leurs alliages. On préférera le lithium.

Le matériau de la cathode 12 est la partie qui caractérise le générateur selon l'invention. Ce matériau collecteur de courant est constitué d'un matériau conducteur électronique de faible porosité. On entend par matériau de faible porosité un matériau dont la porosité est inférieure à 0,05. De préférence encore, la porosité est inférieure à 0,02. De préférence encore, la porosité est inférieure à 0,01. Le volume des pores fermés inaccessibles peut par exemple être déterminé par la technique de pycnométrie hélium, qui est une technique connue de l'homme de métier et le volume total des pores par la méthode de pycnométrie mercure ou porosimétrie au mercure.

Le matériau faiblement poreux peut être, par exemple, choisi parmi les conducteurs métalliques stables dans $SOCl_2$ et leurs mélanges comme le molybdène, le carbone, le nickel, le tungstène et le tantale, certains aciers , les oxydes métalliques conducteurs ($TiO_2$, $SnO_2$ ..). On préfèrera le molybdène. La surface du matériau peut aussi être recouverte de l'un ou de plusieurs de ces matériaux cités plus hauts.

L'utilisation d'une cathode faiblement poreuse permet d'utiliser directement des feuillards métalliques comme électrodes, ce qui est considérablement plus simple que le procédé classique de réalisation des électrodes poreuses de carbone.

Les électrodes poreuses de carbone traditionnellement utilisées dans ce type de générateur à cathode liquide incorporent un collecteur de courant de type déployé ou grille tissée. Lors de leur découpe, il peut y avoir création de bavures qui sont à l'origine de court-circuit interne. Les électrodes de la présente invention évitent ce type d'inconvénient.

Le séparateur est résistant à l'électrolyte, et peut être par exemple en fibres de verre.

L'électrolyte comprend classiquement un sel qui peut être choisi, par exemple, parmi les (tétra)chloroaluminate, (tétra)fluoroborate, (tétra)bromochloroaluminate, (tétra)bromoborate tetrachlorogallate, borohydrures, clovoborate et leurs mélanges. On préférera les sels de tétrachloroaluminate, tétrachlorogallate pour le chlorure de thionyle. Ce sel est en général un sel métallique (en général celui de l'anode), mais on peut aussi utiliser des sels d'ammonium, en particulier de tétraalkylammonium. Le sel préféré est un sel de lithium. La concentration en sel est comprise entre 0,1 M et 2 M, de préférence entre 0,5 M et 1,5 M.

Le solvant de l'électrolyte est constitué par l'oxydant liquide ou gazeux, choisi par exemple dans le groupe consistant en $SOCl_2$, $SO_2$, $SO_2Cl_2$, $S_2Cl_2$, $SCl_2$, $POCl_3$, $PSCl_3$. Dans le cas de matériau positif sous forme de gaz, on utilise ces matériaux dissous classiquement dans des co-solvants, tels que nitriles aromatiques et aliphatiques, DMSO, amides aliphatiques, esters aliphatiques ou aromatiques, carbonates cycliques ou linéaires, butyrolactone, amines aliphatiques ou aromatiques ces amines étant primaires ou secondaires ou tertiaires, et leurs mélanges. On préférera les nitriles aliphatiques comme l'acétonitrile. La concentration en matériau positif dissous correspond en général à la saturation, et est comprise en général entre 60 et 90% en poids de l'électrolyte.

Le matériau positif préféré est le $SOCl_2$ ou $SO_2$ ou encore $SO_2Cl_2$, les deux premiers et en particulier le tout premier étant très préféré.

Le générateur selon l'invention présente une sécurité d'utilisation accrue par rapport aux générateurs $Li/SOCl_2$ classiques.

L'exemple suivant montre qu'un tel générateur est adapté à limiter la durée du courant de décharge, en cas de mise en court-circuit du générateur.

EXEMPLE

Un générateur $Li/SOCl_2$ traditionnel de format cylindrique AA dit "14500" (14 mm de diamètre pour 50 mm de hauteur) et un générateur $Li/SOCl_2$ de même format selon l'invention ont été fabriqués.

L'électrode positive du générateur traditionnel est en carbone poreux. Sa porosité est de 0,7 à 0,9.

L'électrode positive du générateur selon l'invention est non poreuse ou peu poreuse (porosité inférieure à 0,1). Elle est constituée d'une feuille de molybdène.

Les électrodes négatives des deux générateurs sont en lithium métallique.

Le séparateur utilisé pour les deux générateurs est en fibre de verre.

Les deux générateurs ont été remplis avec un électrolyte à base de chlorure de thionyle ($SOCl_2$) contenant 1,35 mol.L$^{-1}$ de $LiAlCl_4$.

Tests :

Les performances électriques et les performances en terme de sécurité d'utilisation ont été comparées.

Les générateurs ont été mis en court-circuit sur une résistance faible de 50 mΩ. La température de l'essai est de 20°C. Le courant débité par les générateurs a été mesuré ainsi que leur élévation de température.

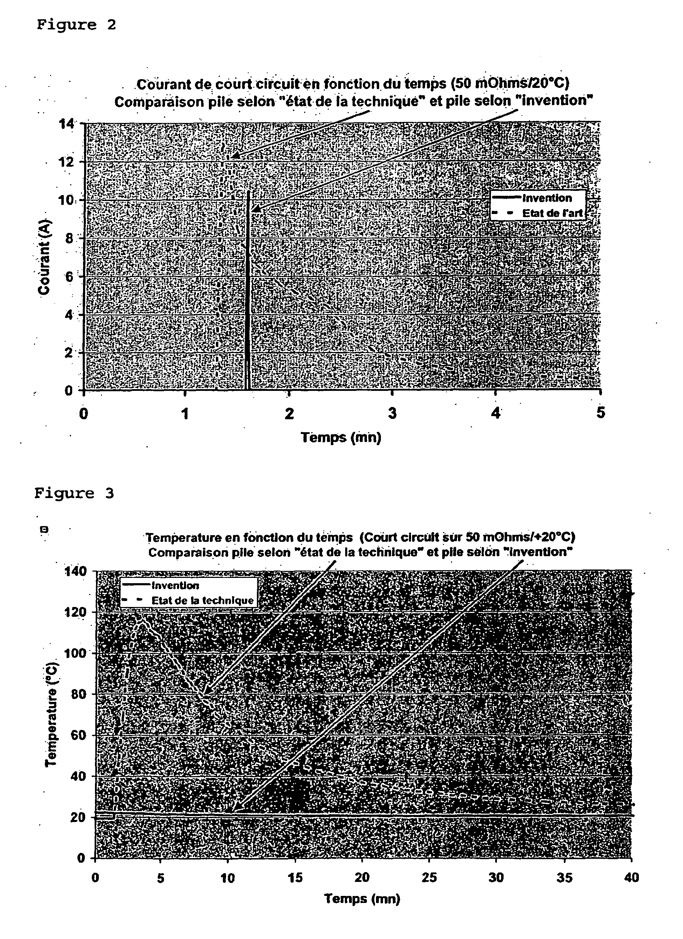

Le tableau 1 et les figures 2 et 3 indiquent les résultats des essais.

Tableau 1 : Résultat des essais de court-circuit

|  | Courant maximum (A) | Elévation de température (°C) |
|---|---|---|
| Générateur traditionnel | 13 | +95 |
| Générateur selon l'invention | 10,5 | 0 |

La figure 2 montre que dans des conditions de court-circuit, le générateur traditionnel débite un courant de 13 A, qui ne chute pas immédiatement à zéro. En effet, 3,5 minutes après le début du court-circuit, le courant n'a toujours pas atteint zéro.

En comparaison, le générateur selon l'invention débite un pic de courant de 10,5A. Un tel générateur est adapté à faire chuter rapidement, en moins de 5 secondes, le courant de court-circuit.

La figure 3 montre que dans des conditions de court-circuit, l'élévation de température du générateur traditionnel atteint 95°C. En comparaison, la température du générateur selon l'invention n'augmente pas.

**Revendications**

1. Générateur électrochimique (1) à matériau positif liquide comprenant au moins une anode métallique (10) et au moins une cathode (12) constituée d'un matériau collecteur de courant et imprégnée du matériau positif liquide, **caractérisé en ce que** ladite au moins une cathode (12) a une porosité inférieure à 0,05.

2. Générateur électrochimique selon la revendication 1, dans lequel la porosité est inférieure à 0,02, de préférence inférieure à 0,01.

3. Générateur selon les revendications 1 à 2, dans lequel ladite au moins une cathode (12) est constituée d'un ou plusieurs éléments conducteurs stables dans le chlorure de thionyle choisi(s) dans le groupe comprenant les métaux, le carbone, les oxydes métalliques.

4. Générateur selon la revendication 3, dans lequel ledit au moins un élément conducteur est choisi parmi Mo, C, Ni, W et Ta.

5. Générateur selon la revendication 4, dans lequel ledit au moins un élément conducteur est Mo.

6. Générateur selon la revendication 3, 4 ou 5, dans lequel ledit au moins un élément conducteur est présent à la surface de la cathode (12).

7. Générateur selon l'une des revendication précédentes, dans lequel ladite au moins une cathode (12) est un feuillard métallique.

8. Générateur selon l'une des revendications précédentes, dans lequel ladite au moins une anode (10) est en lithium.

9. Générateur selon l'une des revendications précédentes, dans lequel le matériau positif liquide est choisi dans le groupe constitué par $SOCl_2$, $SO_2$ et $SO_2Cl_2$.

10. Générateur selon la revendication 9, dans lequel le matériau positif liquide est $SOCl_2$.

11. Générateur selon l'une des revendications précédentes, dans lequel ladite au moins une anode (10) et ladite au moins une cathode (12) sont disposées en un montage spiralé.

12. Procédé de fabrication d'un générateur selon l'une des revendications 1 à 11, comprenant une étape consistant à utiliser un élément conducteur choisi parmi Mo, C, Ni, W et Ta pour la réalisation de la cathode.

13. Procédé selon la revendication 12, dans lequel l'élément conducteur est Mo.

**Claims**

1. Electrochemical generator (1) with liquid positive material comprising at least one metal anode (10) and at least one cathode (12) constituted by a current-collecting material and impregnated with the liquid positive material, **characterized in that** said at least one cathode (12) has a porosity of less than 0.05.

2. Electrochemical generator according to claim 1, in which the porosity is less than 0.02, preferably less than 0.01.

3. Generator according to claims 1 to 2, in which said at least one cathode (12) is constituted of one or more conductive elements which are stable in thionyl chloride chosen from the group comprising metals, carbon, metal oxides.

4. Generator according to claim 3, in which said at least one conductive element is chosen from Mo, C, Ni, W and Ta.

5. Generator according to claim 4, in which said at least one conductive element is Mo.

6. Generator according to claim 3, 4 or 5, in which said at least one conductive element is present at the surface of the cathode (12).

7. Generator according to one of the preceding claims, in which said at least one cathode (12) is a metal foil.

8. Generator according to one of the preceding claims, in which said at least one anode (10) is made of lithium.

9. Generator according to one of the preceding claims, in which the liquid positive material is chosen from the group constituted by $SOCl_2$, $SO_2$ and $SO_2Cl_2$.

10. Generator according to claim 9, in which the liquid positive material is $SOCl_2$.

11. Generator according to one of the preceding claims, in which said at least one anode (10) and said at least one cathode (12) are arranged in a spiral assembly.

12. A method for producing a generator according to one of claims 1 to 11, including a step consisting in employing a conductive element selected from Mo, C, Ni, W and Ta for the production of the cathode.

13. The method according to claim 12, in which the conductive element is Mo.


**Patentansprüche**

1. Elektrochemischer Generator (1) mit flüssigem positivem Material, der mindestens eine metallische Anode (10) und mindestens eine Kathode (12) umfasst, die aus einem Stromkollektormaterial besteht und mit dem flüssigem positivem Material imprägniert ist, **dadurch gekennzeichnet, dass** die mindestens eine Kathode (12) eine Porosität von weniger als 0,05 aufweist.

2. Elektrochemischer Generator nach Anspruch 1, **dadurch gekennzeichnet**, wobei die Porosität weniger als 0,02, vorzugsweise weniger als 0,01 beträgt.

3. Generator nach den Ansprüchen 1 bis 2, wobei die mindestens eine Kathode (12) aus einem oder mehreren in Thionylchlorid beständigen Leiterelementen besteht, das bzw. die aus der Gruppe ausgewählt ist bzw. sind, die Metalle, Kohlenstoff und Metalloxide umfasst.

4. Generator nach Anspruch 3, wobei das mindestens eine Leiterelement aus Mo, C, Ni, W und Ta ausgewählt ist.

5. Generator nach Anspruch 4, wobei das mindestens eine Leiterelement Mo ist.

6. Generator nach Anspruch 3, 4 oder 5, wobei das mindestens eine Leiterelement auf der Oberfläche der Kathode (12) vorliegt.

7. Generator nach einem der vorhergehenden Ansprüche, wobei die mindestens eine Kathode (12) ein Metallband ist.

8. Generator nach einem der vorhergehenden Ansprüche, wobei die mindestens eine Anode (10) aus Lithium ist.

9. Generator nach einem der vorhergehenden Ansprüche, wobei das flüssige positive Material aus der Gruppe bestehend aus $SOCl_2$, $SO_2$ und $SO_2Cl_2$ ausgewählt ist.

10. Generator nach Anspruch 9, wobei das flüssige positive Material $SOCl_2$ ist.

11. Generator nach einem der vorhergehenden Ansprüche, wobei die mindestens eine Anode (10) und die mindestens eine Kathode (12) in einer Spiralkonstruktion angeordnet sind.

12. Verfahren zur Fertigung eines Generators nach einem der Ansprüche 1 bis 11, das einen Schritt umfasst, der in der Verwendung eines Leiterelements, das aus Mo, C, Ni, W und Ta ausgewählt ist, zur Herstellung der Kathode besteht.

13. Verfahren nach Anspruch 12, wobei das Leiterelement Mo ist.

Figure 1

Figure 2

Courant de court circuit en fonction du temps (50 mOhms/20°C)
Comparaison pile selon "état de la technique" et pile selon "invention"

Figure 3

Temperature en fonction du temps (Court circuit sur 50 mOhms/+20°C)
Comparaison pile selon "état de la technique" et pile selon "invention"

**EP 1 677 376 B1**

## RÉFÉRENCES CITÉES DANS LA DESCRIPTION

**Documents brevets cités dans la description**

- US 5800941 A